(19) Europäisches Patentamt
European Patent Office
Office européen des brevets

(11) EP 0 839 932 A1

(12) # DEMANDE DE BREVET EUROPEEN

(43) Date de publication:
**06.05.1998 Bulletin 1998/19**

(51) Int Cl.[6]: **C23F 11/12**, E21B 41/02

(21) Numéro de dépôt: **97402465.5**

(22) Date de dépôt: **17.10.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **29.10.1996 FR 9613177**

(71) Demandeur: **CECA S.A.**
**92800 Puteaux (FR)**

(72) Inventeurs:
- **Fouquay, Stéphane**
**76130 Mont Saint Aignan (FR)**
- **Pou, Tong Eak**
**95800 Courdimanche (FR)**

(74) Mandataire: **Haicour, Philippe**
**ELF ATOCHEM S.A.,**
**Département Propriété Industrielle.**
**4-8, Cours Michelet,**
**La Défense 10**
**92091 Paris Cédex 42 (FR)**

(54) **Alcool propargylique, homologues et dérives oxyéthyles comme inhibiteurs de la corrosion carbonique du fer**

(57) L'alcool propargylique, ses homologues immédiatement supérieurs et leurs dérivés oxyéthylés de 1 à 4 OE, sont des inhibiteurs de corrosion carbonique dénués de toxicité pour l'environnement marin.

EP 0 839 932 A1

## Description

La présente invention a trait à l'inhibition de la corrosion carbonique du fer et des métaux ferreux à l'aide d'inhibiteurs non écotoxiques.

Dans la production du pétrole et du gaz, une corrosion due au gaz carbonique (on parle simplement de corrosion carbonique), a lieu en fond de puits, où la température se situe en général vers 60°C ou plus, dans les canalisations de surface et dans les installations de raffinage du brut. Le remède habituellement apporté est l'utilisation d'inhibiteurs de corrosion à base de sels d'amines, de sels d'ammonium quaternaire, d'imidazolines ou d'esters phosphoriques, mais ces composés sont très insatisfaisants en ce qui concerne leur écotoxicité en milieu marin. Des solutions plus acceptables ont été apportées avec l'utilisation de N-alcoylsarcosines (GB 2,028,810), de N-alkyl-amidopropylbétaïnes (EP 0,446,616), voire de leur mélange synergique (demande européenne n° 96401713).

D'autres composés viennent maintenant d'être découverts de façon inattendue, qui sont utilisables comme inhibiteurs non écotoxiques de la corrosion carbonique du fer et des métaux ferreux. Il s'agit de l'alcool propargylique, de ses homologues supérieurs, et de leurs dérivés oxyéthylés, composés acétyléniques répondant à la formule générale

$$H-C\equiv C-(CH_2)_m-O-(CH_2-CH_2-O)_n-H$$

formule dans laquelle m peut prendre toutes valeurs entières de 1 à 3, et n peut prendre toutes valeurs entières de 0 à 4.

L'alcool propargylique est un alcool acétylénique connu, entre autres, pour limiter l'attaque du fer métal dans des décapants chlorhydriques utilisés à froid ou à chaud. Rien ne prédisposait l'homme du métier à voir, tant dans l'alcool propargylique lui-même que dans ses homologues immédiatement supérieurs ou leurs dérivés d'oxyéthylation, des inhibiteurs de la corrosion carbonique non écotoxiques, et l'invention est un procédé nouveau pour limiter la corrosion carbonique de l'acier dans les milieux aqueux, qui consiste à utiliser à titre d'inhibiteur de corrosion, une composition aqueuse comportant comme matière active au moins un dérivé acétylénique correspondant à la formule ci-dessus.

Un dérivé particulièrement intéressant est le dérivé d'oxyéthylation de l'alcool propargylique par une molécule d'oxyde d'éthylène, ci-après alcool propargylique 1 OE

$$H-C\equiv C-CH_2-O—CH_2-CH_2-OH$$

Les dérivés oxyéthylés sont généralement disponibles sous forme de produits techniques qui contiennent, outre en majorité le dérivé oxyéthylé au nombre visé d'oxydes d'éthylène, les composés oxyéthylés d'ordre inférieur ou supérieur, l'acide propargylique lui-même et un peu de monoéthylèneglycol. Tous ces composés sont des inhibiteurs au sens de l'invention, et le produit technique d'oxyéthylation constitue une matière active efficace et économiquement avantageuse. Ces produits, aussi bien purs que techniques, individuellement ou en mélange, se formulent sans difficulté aucune en compositions inhibitrices aqueuses titrant de 20 à 50 % de matière active, ce dernier terme s'entendant de l'ensemble alcool propargylique et de ses dérivés d'oxyéthylation.

Ces compositions s'utilisent de façon banale, tant en injection continue qu'en traitement lot par lot. Les dosages utiles sont généralement compris entre 5 ppm et 20 ppm par rapport au milieu aqueux à inhiber.

Les exemples qui suivent, non limitatifs, illustrent l'invention et ses avantages.

Exemple 1 : Efficacité inhibitrice d'alcool propargylique 1 OE.

On a utilisé évalué l'efficacité inhibitrice de corrosion en milieu saturé en gaz carbonique d'un alcool propargylique technique, représentable par la formule

$$H-C\equiv C-CH_2-O-(CH_2-CH_2-O)_n-H$$

où n a une valeur statistique voisine de 1, dans un milieu corrosif, constitué d'une solution de type NACE contenant 50 g/l de NaCl et de 0,25 mg/l d'acide acétique, saturée par barbotage en continu de $CO_2$

On opère par mesure de résistance de polarisation, dans une cellule de Pyrex de 600 ml thermostatée comportant, outre une entrée et une sortie de gaz, trois électrodes assujetties à la cellule par des rodages, à savoir, une électrode de travail en acier au carbone dont la surface de contact avec la solution corrosive est de 1 $cm^2$, une électrode de référence au calomel saturé et une contre-électrode en platine ayant une très grande surface de contact avec la solution

corrosive. On place dans la cellule 500 ml de la solution corrosive, témoin ou additionnée de l'inhibiteur, puis on place la contre-électrode et l'électrode de référence. On désaère la solution par barbotage d'azote pendant une heure, puis on la sature en $CO_2$ par barbotage pendant au moins une heure. Pour bien assurer la saturation en $CO_2$, on laisse barboter ce gaz pendant toute la durée de l'expérience.

On calcule la vitesse de corrosion instantanée $V_{corr}$ à partir de la mesure de résistance de polarisation et on estime l'efficacité inhibitrice de corrosion du produit testé par le pourcentage de protection ( %P) qu'il confère par rapport au système témoin selon la relation :

$$\%P = ((V^0_{corr} - V^i_{corr}) / V^0_{corr}) \times 100$$

où

$V^0_{corr}$ = vitesse de corrosion sans inhibiteur
$V^i_{corr}$ = vitesse de corrosion en présence d'inhibiteur à concentration donnée.

Le produit testé est une composition d'alcool propargylique 1 OE technique, dont les composants sont les suivants :

| Composant | % en poids |
|---|---|
| Alcool propargylique 1 OE | 78 |
| Alcool propargylique 2 OE | 6,8 |
| Alcool propargylique libre | 13,6 |
| Monoéthyléne glycol | 1,6 |

Il a été utilisé sous forme d'une solution aqueuse à 30 % de produit technique.

Le tableau 1 reproduit les résultats de pourcentage de protection obtenus avec différents dosages d'alcool propargylique et d'alcool propargylique 1 OE technique, à la température ambiante (25°C), la matière active de l'alcool propargylique technique s'entendant au sens donné plus haut de l'ensemble alcool propargylique et ses dérivés oxyéthylés.

Tableau 1 : Efficacités inhibitrices de corrosion carbonique de l'alcool propargylique et de l'alcool propargylique 1 OE, exprimées en pourcentage de protection. Le tableau comporte aussi les résultats obtenus avec un autre composant selon l'invention, le 4-pentyn-1-ol.

Tableau 1

| Dosage de matière active (ppm) | 5 | 10 | 20 | 50 | 100 |
|---|---|---|---|---|---|
| Alcool propargylique 1 OE technique | 55 % | 65 % | 75 % | 85 % | 90 % |
| Alcool propargylique | 40 % | 50 % | 65 % | 80 % | 80 % |
| 4-pentyn-1-ol | 44 % | 55 % | 58 % | 63 % | 72 % |

Des résultats tous intéressants, qui sont toutefois légèrement en faveur des produits d'oxyéthylation.

Exemple 2

On a évalué la toxicité de l'alcool propargylique 1 OE technique. Les mesures de toxicités de l'alcool propargylique 1 OE ont été effectuées sur deux micro-organismes marins, une bactérie, le *Photobacterium phosphoreum,* et une algue, le *Skeletonema costatum.*

Le test de Microtox, pratiqué selon la Norme AFNOR NF T90-320, est appliqué au *Photobacterium.* La toxicité déterminée, selon ce test Microtox, est exprimée en $CL_{50}$ (concentration létale en mg/l pour détruire 50 % de la population en 15 minutes). La toxicité selon la méthode ISO/DIS 10253 a été appliquée au *Skeletonema costatum,* la toxicité correspondante étant exprimée en $CE_{50}$ (concentration effective en mg/l pour inhiber la croissance de 50 % de la population en 72 heures).

Les tableaux 2 et 3 donnent respectivement les toxicités comparées du mélange 50:50 bétaïne / sarcosinate (selon la demande européenne n° 96401713) et de l'alcool propargylique 1 OE technique en milieu marin, et les efficacités inhibitrices, à température ambiante, obtenues avec ces différentes solutions :

Tableau 2

| Toxicité | Microtox ($CL_{50}$) en mg/l | Skeletonema Costatum ($CE_{50}$) en mg/l |
|---|---|---|
| Bétaïne / Sarcosinate 50:50 | 26 | 1 - 10 |
| Alcool propargylique | 3556 | non déterminé |
| Alcool propargylique 1 OE | 3118 | 1 - 10 |
| 4-pentyl-1-ol | 795 | non déterminé |

Tableau 3

| | Bétaïne/Sarcosinate | Alcool propargylique 1 OE |
|---|---|---|
| Dose | pourcentages de protection | |
| 10 ppm | 94 % | 65 % |
| 20 ppm | 96 % | 75 % |
| 50 ppm | 96 % | 85 % |
| 100 ppm | 97 % | 90 % |

L'alcool propargylique 1 OE est légèrement moins efficace que le mélange sarcosinate/bétaïne (50/50); en revanche, il est moins écotoxique au test Microtox.

**Revendications**

1. Procédé pour limiter la corrosion carbonique de l'acier dans les milieux aqueux, caractérisé en ce que l'on utilise, à titre d'inhibiteur de corrosion, une composition aqueuse comportant comme matière active au moins un dérivé acétylénique correspondant à la formule :

$$H-C\equiv C-(CH_2)_m-O-(CH_2-CH_2-O)_n-H$$

dans laquelle m peut prendre toute valeur entière de 1 à 3, et n toute valeur entière de 0 à 4.

2. Procédé selon la revendication 1, caractérisé en ce que la matière active de l'inhibiteur est le dérivé alcool propargylique oxyéthylé à une molécule d'oxyde éthylène, de formule :

$$H-C\equiv C-CH_2-O-CH_2-CH_2-OH$$

3. Inhibiteur de corrosion carbonique constitué d'une solution aqueuse à 20 - 50% en poids d'un ou plusieurs composés répondant à la formule générale

$$H-C\equiv C-(CH_2)_m-O-(CH_2-CH_2-O)_n-H$$

formule dans laquelle m peut prendre toutes valeurs entières de 1 à 3, et n peut prendre toutes valeurs entières de 0 à 4.

4. Inhibiteur selon la revendication 3, dans lequel la matière active est un alcool propargylique 1 OE technique.

Office européen des brevets

# RAPPORT DE RECHERCHE EUROPEENNE

Numéro de la demande
EP 97 40 2465

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 294 641 A (BAYER AG) 14 décembre 1988<br>* page 8, colonne 45-57 * | 1 | C23F11/12<br>E21B41/02 |
| Y | * page 8, ligne 45-57 * | 2-4 | |
| Y | EP 0 239 770 A (BASF CORP) 7 octobre 1987<br>* revendications 1,4-7 * | 2-4 | |
| X | US 3 779 935 A (LOONEY J ET AL)<br>* colonne 6, ligne 36-42; revendication 1 * | 1 | |
| X | US 4 784 797 A (TREYBIG DUANE S ET AL)<br>* colonne 1, ligne 13-38; exemples 36,38,40 *<br>* colonne 21, ligne 20-48 * | 1 | |
| A | FR 1 567 406 A (IMPERIAL CHEMICAL INDUSTRIES) 16 mai 1969<br>* revendications A1-A4 * | 1-4 | |
| A | US 3 049 496 A (MONROE R. F.) 14 août 1962<br>* tableau 1 * | 1-4 | DOMAINES TECHNIQUES RECHERCHES (Int.Cl.6) |
| A | US 3 030 311 A (OAKES B. D.) 17 avril 1962<br>* revendications 1,2 * | 1-4 | C23F<br>E21B |
| A | US 3 401 120 A (CHIDDIX MAX EUGENE ET AL) 10 septembre 1968<br>* colonne 1; revendication 1 * | | |
| A | US 5 084 210 A (TEETERS SUSAN M) 28 janvier 1992 | | |

Le présent rapport a été établi pour toutes les revendications

| Lieu de la recherche | Date d'achèvement de la recherche | Examinateur |
|---|---|---|
| LA HAYE | 23 janvier 1998 | Torfs, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)